# EUROPEAN PATENT SPECIFICATION

(11) **EP 2 851 535 B1**
(45) Date of publication and mention of the grant of the patent: **14.02.2018**
(21) Application number: 13791461.0
(22) Date of filing: 17.05.2013
(51) Int. Cl.: F02B 39/16, F01D 25/00

(54) **SUPERCHARGER CLEANING DEVICE, SUPERCHARGER EQUIPPED WITH SAME, INTERNAL COMBUSTION ENGINE EQUIPPED WITH SAME, AND SUPERCHARGER CLEANING METHOD**
SUPERLADERREINIGUNGSVORRICHTUNG, SUPERLADER DAMIT, BRENNKRAFTMASCHINE DAMIT UND SUPERLADERREINIGUNGSVERFAHREN
DISPOSITIF DE NETTOYAGE DE COMPRESSEUR D'ALIMENTATION, COMPRESSEUR D'ALIMENTATION ÉQUIPÉ DE CE DERNIER, MOTEUR À COMBUSTION INTERNE ÉQUIPÉ DE CE DERNIER ET PROCÉDÉ DE NETTOYAGE DE COMPRESSEUR D'ALIMENTATION

(30) Priority: 18.05.2012 JP 2012114623
(43) Date of publication of application: 25.03.2015
(73) Proprietor: Mitsubishi Heavy Industries, Ltd., Tokyo 108-8215 (JP)
(72) Inventor: MATSUO, Kazuma, Tokyo 108-8215 (JP); SHIRAISHI, Keiichi, Tokyo 108-8215 (JP); ARAKAWA, Hiroyuki, Tokyo 108-8215 (JP)
(74) Representative: Hoffmann Eitle
(86) International application number: PCT/JP2013/063797
(87) International publication number: WO 2013/172452

(56) References cited:
- EP-A2- 0 781 897
- WO-A1-2007/031598
- WO-A1-2011/067464
- WO-A1-2011/067464
- DE-A1- 2 428 551
- JP-A- H0 474 577
- JP-A- 2008 202 557
- JP-U- H01 159 134
- US-A- 4 548 040

## Description

### Technical Field

The present invention relates to a turbocharger cleaning device, a turbocharger equipped with the same, an internal combustion engine equipped with the same, and a turbocharger cleaning method.

### Background Art

In a turbocharger, soot (carbon containing particles) is easily deposited on a portion, which is exposed to combustion gas, such as a turbine. When the deposition of the soot is left as it is and the maintenance is neglected, rotation of the turbine becomes unstable, and there is a concern that damage of the turbocharger and seizure of a main engine may occur. However, the deposited soot is fixed to an inner portion of the turbocharger and cannot be simply removed.

As a method for removing the fixed soot, there is hot water immersion cleaning, blast cleaning, cleaning by usage of a cleaning agent, solid cleaning, water cleaning, or the like. In the hot water immersion cleaning, the blast cleaning, and the cleaning with a cleaning agent, the turbocharger is stopped and the cleaning is performed. In the solid cleaning and the water cleaning, the cleaning is performed during operation of the turbocharger. Currently, as the method for removing the fixed soot, the solid cleaning is mainly adopted.

For example, in the solid cleaning, there is a method in which powder of magnesium hydroxide or calcium hydroxide is sprayed to a turbine of the turbocharger and prevents a stain from adhering on a turbine blade or an exhaust gas boiler (refer to Japanese Unexamined Patent Application Publication No. 3-264736).

Another example can be seen in document WO 2011/067464.

### Summary of Invention

### Technical Problem

In the solid cleaning, since collision energy is used, the solid cleaning is effective to remove the soot fixed to a rotor blade. However, there is a problem in that the removal effect on a stator blade, on which a location where flow is slow or the like exists, is limited.

Moreover, since the soot once fixed is not simply removed, if a solid cleaning agent having high hardness is input to increase cleaning effect, there is a problem that wear in a tip part of the rotor blade is promoted.

Meanwhile, in the turbocharger, sulfuric acid is generated by the sulfur content contained in a fuel. There is a problem in that the sulfuric acid corrodes the inner portion of the turbocharger. JP 3-264736 suggests that condensed sulfuric acid is neutralized by mixing Mg(OH)₂ or the like with the solid cleaning agent and performing the cleaning, and corrosion of a surface of a boiler water pipe is suppressed. However, it is difficult to make the cleaning agent uniformly adhere on a portion in which the soot adherence is to be prevented, and there are technical problems which are described below.

A turbine of a turbocharger of an internal combustion engine, which is operated under a normal load, is rotated at high speed, and even when spraying is performed using magnesium hydroxide or the like as a cleaning agent, there is a problem that the cleaning agent does not uniformly adhere on the blade by centrifugal force due to the high rotational speed of the blade.

Moreover, if the magnesium hydroxide is exposed to a high temperature of 300°C or more, the magnesium hydroxide is decomposed and becomes magnesium oxide, and there is a problem in that the cleaning effect of the turbine cannot be realized.

Moreover, a method, which directly detects rotation signals of the turbocharger when air is blown into an engine combustion chamber immediately after an engine is stopped and sprays a cleaning agent at timing when a revolution speed is decreased, is considered. However, when a tachometer is not mounted on the turbocharger like in a passenger car, there is a problem in that the method cannot be applied.

The present invention is made in consideration of the above-described circumstances, and an object thereof is to provide a turbocharger cleaning device which securely adjusts spray timing of a cleaning agent without measuring the timing manually, makes the cleaning agent uniformly adhere on a turbine of a turbocharger if possible, and prevents corrosion of the turbine of the turbocharger, a turbocharger equipped with the same, an internal combustion engine equipped with the same, and a turbocharger cleaning method.

As described above, the input timing of the cleaning agent had not yet been adjusted. However, the inventors observed an actual operation of a turbocharger in detail, and it was found that the input of the cleaning agent was done in conjunction with air blow, and thus, the timing was securely adjusted.

### Solution to Problem

According to a first aspect of the present invention, there is provided a turbocharger cleaning device including: a cleaning agent storage part in which a cleaning agent is stored to clean a turbocharger driven by exhaust gas introduced from an internal combustion engine; an air supply pipe which is configured to introduce transport air to the cleaning agent storage part; an on-off valve which is provided in the air supply pipe; a cleaning agent supply pipe which is configured to introduce the cleaning agent stored in the cleaning agent storage part from the cleaning agent storage part to the turbocharger along with the transport air; and a controller which is configured to control an operation of the on-off valve, in which the controller is configured to open the on-off valve after the controller receives an operation signal of a device in conjunction with air blow which discharges the remaining exhaust gas by compressed air introduced via a compressed air pipe during a predetermined time after the internal combustion engine and the turbocharger stop.

According to the first aspect, the controller included in the turbocharger cleaning device receives the operation signal of the device in conjunction with the air blow which discharges the remaining exhaust gas after the internal combustion engine stops. For example, as the device which is in conjunction with the air blow, there is an air blow on-off valve, a priming pump, or the like. The controller is operated with the signal of the device in conjunction with the internal combustion engine as trigger, and thus, the controller is securely operated according to the timing of the air blow with respect to the internal combustion engine. In addition, if the controller is operated, a signal opening the on-off valve provided in the air supply device is sent. Accordingly, the transport air supplied to the cleaning agent storage part is supplied only at the timing of the air blow, that is, only at the time of low rotational speed of the turbocharger.

In this way, since the timing of the air blow is captured and the cleaning agent can be supplied to the turbocharger, for example, even when a tachometer is not provided in the turbocharger like in a passenger car, the supply of the cleaning agent during a normal operation, in which the turbocharger is operated at high rotational speed, can be avoided.

Moreover, for example, general service air or the like which is used inside ships is used as the transport air which transports the cleaning agent. In addition, for example, magnesium hydroxide or the like is used as the cleaning agent.

Moreover, since the cleaning agent is supplied at the time of the air blow of the internal combustion engine, compared to the time of a normal operation of the internal combustion engine, the cleaning agent can be used in a condition in which the revolution speed of the turbocharger is lower and a turbine temperature is lower, that is, a condition suitable for spraying the cleaning agent. Accordingly, it is possible to make the cleaning agent appropriately and uniformly adhere on the turbine which is rotated at relatively low temperature and low rotational speed if possible.

In the above-described turbocharger cleaning device, the controller opens the on-off valve after the controller receives the operation signal of the device and a predetermined offset time elapses.

According to this configuration, the timing when the on-off valve of the turbocharger cleaning device is opened by the controller is offset from the timing when the controller receives the operation signal of the device. Accordingly, the manual operation of the on-off valve is not required, and the cleaning agent can be automatically sprayed in the state where the turbocharger is rotated at low rotational speed. In addition, the revolution speed of the turbocharger is temporarily increased by inertial force immediately after the air blow starts. However, since the on-off valve is opened after the operation signal of the device is received and a predetermined offset time elapses, that is, at the timing when the turbocharger is rotated at low rotational speed, the timing when the revolution speed of the turbocharger is temporarily increased immediately after the air blow starts can be avoided, and thus, it is possible to make the cleaning agent securely adhere on the turbine of the turbocharger.

Moreover, preferably, the offset time may be changed. The offset time may be changed, and thus, it is possible to correspond to the change of the revolution speed in the turbine of the turbocharger when the air blow is different according to the capacity or the like of the internal combustion engine or the turbocharger.

In the above-described turbocharger cleaning device, the controller may close the on-off valve after the on-off valve is opened and a predetermined holding time elapses.

According to this configuration, the predetermined holding time is applied after the on-off valve is opened, and thus, a time interval in which the on-off valve is opened and the cleaning agent is supplied is determined. Accordingly, it is possible to supply an appropriate amount of the cleaning agent to the turbocharger.

In addition, preferably, the holding time may be changed. The holding time may be changed, and thus, it is possible to correspond to the change of the revolution speed in the turbine of the turbocharger when the air blow is different according to the capacity or the like of the internal combustion engine or the turbocharger.

According to a second aspect of the present invention, there is provided a turbocharger including the above-described turbocharger cleaning device.

According to the second aspect, it is possible to capture the timing of the air blow and spray the cleaning agent automatically without manually measuring the spray timing of the cleaning agent, and the spray timing and the duration of applying the cleaning agent can be adjusted by the controller. Accordingly, it is possible to maintain the turbine of the turbocharger in a sound condition.

According to a third aspect of the present invention, there is provided an internal combustion engine including the above-described turbocharger.

According to the third aspect, since the turbocharger can be maintained in a sound condition, stability of the operation of the internal combustion engine can be improved.

According to a fourth aspect of the present invention, there is provided an internal combustion engine including: a turbocharger which is driven by exhaust gas introduced from the internal combustion engine; a turbocharger cleaning device which supplies a cleaning agent to the turbocharger; an on-off valve which is provided in the turbocharger cleaning device; and a controller which controls an operation of the on-off valve, in which the controller opens the on-off valve to supply the cleaning agent to the turbocharger after the controller receives an operation signal of a device in conjunction with air blow of the internal combustion engine.

In the above-described internal combustion engine, the on-off valve may be provided in the turbocharger cleaning device. For example, the on-off valve is provided in the cleaning agent supply pipe. Accordingly, a location at which the on-off valve is installed can be selected from a wide range.

In the above-described internal combustion engine, the controller may open the on-off valve after the controller receives the operation signal of the device and a predetermined offset time elapses.

According to this configuration, the timing when the on-off valve of the turbocharger cleaning device is opened by the controller is offset from the timing when the controller receives the operation signal of the device. Accordingly, the manual operation of the on-off valve is not required, and the cleaning agent can be automatically sprayed in the state where the turbocharger is rotated at low rotational speed. In addition, the revolution speed of the turbocharger is temporarily increased by inertial force immediately after the air blow starts. However, since the on-off valve is opened after the operation signal of the device is received and a predetermined offset time elapses, that is, at the timing when the turbocharger is rotated at low rotational speed, the timing when the revolution speed of the turbocharger is temporarily increased immediately after the air blow starts can be avoided, and thus, it is possible to make the cleaning agent securely adhere on the turbine of the turbocharger.

Moreover, preferably, the offset time may be changed. The offset time may be changed, and thus, it is possible to correspond to the change of the revolution speed in the turbine of the turbocharger when the air blow is different according to the capacity or the like of the internal combustion engine or the turbocharger.

In the above-described internal combustion engine, the controller may close the on-off valve after the on-off valve is opened and a predetermined holding time elapses.

According to this configuration, the predetermined holding time is applied after the on-off valve is opened, and thus, a time interval in which the on-off valve is opened and the cleaning agent is supplied is determined. Accordingly, it is possible to supply an appropriate amount of the cleaning agent to the turbocharger.

In addition, preferably, the holding time is changed. The holding time may be changed, and thus, it is possible to correspond to the change of the revolution speed in the turbine of the turbocharger when the air blow is different according to the capacity or the like of the internal combustion engine or the turbocharger.

According to a fifth aspect of the present invention, there is provided a turbocharger cleaning method using a turbocharger cleaning device including: a cleaning agent storage part in which a cleaning agent is stored to clean a turbocharger driven by exhaust gas introduced from an internal combustion engine; an air supply pipe which introduces transport air transporting the cleaning agent to the cleaning agent storage part; an on-off valve which is provided in the air supply pipe; a cleaning agent supply pipe which introduces the cleaning agent stored in the cleaning agent storage part to the turbocharger along with the transport air; and a controller which controls an operation of the on-off valve, in which the controller opens the on-off valve after the controller receives an operation signal of a device in conjunction with air blow which discharges the remaining exhaust gas after the internal combustion engine stops.

According to the fifth aspect of the present invention, since the timing of the air blow is captured and the cleaning agent can be supplied to the turbocharger, for example, even when a tachometer is not provided in the turbocharger like in a passenger car, the supply of the cleaning agent during a normal operation, in which the turbocharger is operated at high rotational speed, can be avoided. Since the cleaning agent is supplied at the time of the air blow of the internal combustion engine, compared to the time of a normal operation of the internal combustion engine, the cleaning agent can be used in a condition in which the revolution speed of the turbocharger is lower and a turbine temperature is lower, that is, a condition suitable for spraying the cleaning agent. Accordingly, it is possible to make the cleaning agent appropriately and uniformly adhere on the turbine which is rotated at relatively low temperature and low rotational speed if possible.

According to a sixth aspect of the present invention, there is provided a turbocharger cleaning method which comprises a cleaning agent storage part in which a cleaning agent is stored to clean a turbocharger driven by exhaust gas introduced from an internal combustion engine; an air supply pipe which introduces transport air to the cleaning agent storage part; an on-off valve which is provided in the air supply pipe; a cleaning agent supply pipe which introduces the cleaning agent stored in the cleaning agent storage part from the cleaning agent storage part to the turbocharger along with the transport air; and a controller which controls an operation of the on-off valve; the method comprising a step wherein the controller opens the on-off valve after the controller receives an operation signal of a device in conjunction with air blow which discharges the remaining exhaust gas by compressed air introduced via a compressed air pipe during a predetermined time after the internal combustion engine and the turbocharger stop.

According to the sixth aspect of the present invention, the spray timing and the duration of applying the cleaning agent are automatically adjusted by the controller without manually measuring the spray timing of the cleaning agent, it is possible to make the cleaning agent securely adhere on the turbine of the turbocharger, and corrosion of the turbine of the turbocharger can be prevented.

### Advantageous Effects of Invention

According to the present invention, the controller is operated with a signal of a device in conjunction with air blow of an internal combustion engine as trigger, and thus, timing when a cleaning agent is sprayed to a turbocharger can be determined. Accordingly, the cleaning agent can be supplied in a condition in which the turbocharger is rotated at low rotational speed and is operated at relatively low temperature, and thus, the cleaning agent can be automatically sprayed in a condition suitable for spraying the cleaning agent.

### Brief Description of Drawings

Fig. 1 is a schematic configuration diagram showing a turbocharger attached internal combustion engine including a turbocharger cleaning device according to an embodiment of the present invention.
Fig. 2 is a timing chart showing an operation example of the turbocharger cleaning device shown in Fig. 1.

### Description of Embodiments

Hereinafter, embodiments of a turbocharger cleaning device according to the present invention, a turbocharger equipped with the same, an internal combustion engine equipped with the same, and a turbocharger cleaning method will be described with reference to the drawings.

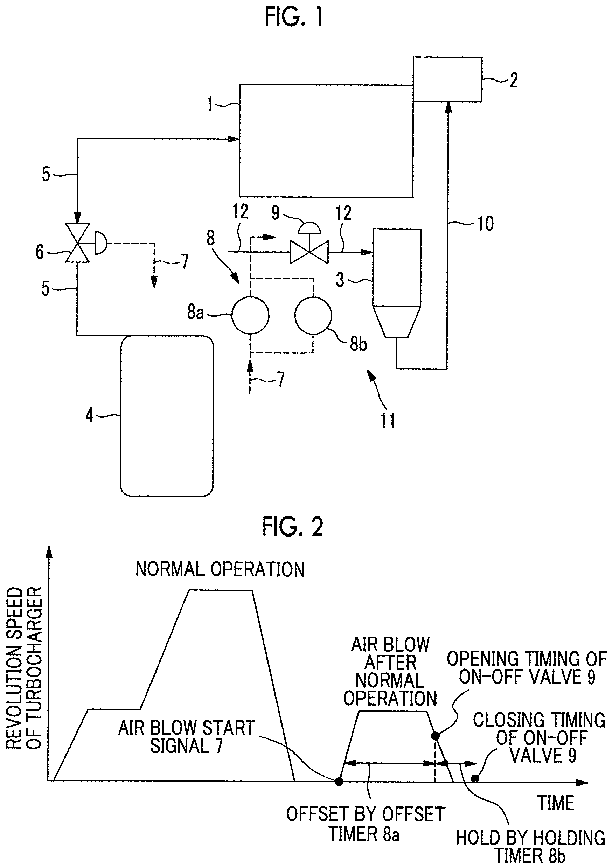

Fig. 1 shows a schematic configuration of a turbocharger attached internal combustion engine including a turbocharger cleaning device according to an embodiment of the present invention.

For example, an internal combustion engine 1 is a diesel engine for a main engine drive which is provided on a ship. The internal combustion engine 1 is driven by supplying fuel introduced from a fuel injection pump (not shown) and compressed air introduced from a turbocharger 2 described below into a cylinder.

The turbocharger 2 which is an object to be cleaned is provided above an air cooler (not shown) via a stay, and includes a turbine which is driven to rotate by exhaust gas introduced from the internal combustion engine 1, a rotary shaft in which the turbine is connected to one end, and an air compressor which is connected to the other end of the rotary shaft. A rotating force obtained by the turbine is transmitted via the rotary shaft, the air compressor is driven to rotate, and thus, suction air is compressed. After the air compressed by the air compressor is cooled by the air cooler, the compressed air is supplied to the internal combustion engine 1.

The turbine is configured of turbine blades which receive the exhaust gas and is rotated, and is accommodated in a turbine casing. The turbine casing is connected to an inlet of the turbocharger 2 into which the exhaust gas is introduced from an exhaust gas manifold (not shown) of the internal combustion engine 1, and to an outlet of the turbocharger 2 which introduces the exhaust gas passing through the turbine blade to the outside of the turbine.

A starting air tank 4 is connected to the internal combustion engine 1 via a compressed air pipe 5. The compressed air, which is compressed to a predetermined pressure by a starting air compressor (not shown), is stored in the starting air tank 4. The compressed air stored in the starting air tank 4 is used when the internal combustion engine 1 starts or when air blow is performed on the exhaust gas remaining in the cylinder or the like after the internal combustion engine 1 stops. The upstream end of the compressed air pipe 5 is connected to the outlet side of the starting air tank 4, and the downstream end of the compressor air pipe is connected to the internal combustion engine 1 side. A compressed air control valve 6 which controls the circulated air flow is provided at an intermediate position of the compressed air pipe 5. Opening and closing of the compressed air control valve 6 are controlled by a compressed air control part (not shown). In this way, the compressed air control valve 6 or the compressed air control part is operated to perform in conjunction with starting of the internal combustion engine 1 or the air blow.

Moreover, a priming pump (not shown) is provided in the internal combustion engine 1. For example, the priming pump is used to increase lubricating oil pressure to a predetermined pressure. Since a starting signal of the priming pump is performed in conjunction with the air blow, as described below, the priming pump can be used as a device which has a supply start timing in regard to a cleaning agent.

The compressed air control valve 6, the compressed air control part, or the priming pump, which is a device in conjunction with the air blow, sends an air blow starting signal 7. Moreover, in Fig. 1, as an example, the air blow starting signal 7 is sent from the compressed air control valve 6.

A turbocharger cleaning device 11 includes an air supply pipe 12 for introducing general service air inside a ship, an on-off valve 9 which controls the air flow of the air supply pipe 12, a controller 8 which controls the operation of the on-off valve 9, a cleaning powder hopper (cleaning agent storage part) 3 which is connected to the downstream end of the air supply pipe 12, and a cleaning agent supply pipe 10 which is connected to the outlet side of the cleaning powder hopper 3. A low pressure pipe is used for the cleaning agent supply pipe 10. Moreover, the on-off valve 9 may be provided in the cleaning agent supply pipe 10.

The cleaning powder hopper 3 is a container which can store a cleaning agent (powder of magnesium hydroxide). In addition, instead of magnesium hydroxide, calcium hydroxide, marine grit, active carbon, or the like may be used. The magnesium hydroxide powder is agitated to be mixed by the air supplied from the air supply pipe 12 to the cleaning powder hopper 3, and the mixed powder and air that becomes a solid-gas two-phase flow, is discharged from the outlet of the cleaning powder hopper 3, and is introduced to the cleaning agent supply pipe 10.

The upstream end (the left side in Fig. 1) of the cleaning agent supply pipe 10 is connected to the outlet side of the cleaning powder hopper 3, and the downstream end of the cleaning agent supply pipe is connected to the turbocharger 2. Accordingly, the air flow including the magnesium hydroxide powder is introduced to the upstream side of the turbine of the turbocharger 2.

The controller 8 includes an offset timer 8a and a holding timer 8b. The offset timer 8a and the holding timer 8b receive the air blow starting signal 7 and are operated.

The offset timer 8a sets a time when the offset timer receives the air blow starting signal 7 of the compressed air control valve 6 and opens the on-off valve 9 after a predetermined on-off time elapses. By using the offset timer 8a, timing when the on-off valve 9 of the turbocharger cleaning device 11 is opened by the controller 8 is offset from timing when the compressed air control valve 6 receives the air blow starting signal 7. In this way, the offset time is set, and thus, timing when a revolution speed of the turbocharger 2 is temporarily increased immediately after the air blow starts can be avoided, and it is possible to make the cleaning agent securely adhere on the turbine of the turbocharger 2 in a state where the turbocharger 2 is operated at low rotational speed.

The holding timer 8b sets a time when the on-off valve 9 is held in an opened state after the holding timer is offset from the timing in which the air blow starting signal 7 is received and opens the on-off valve 9. By using the holding timer 8b, the on-off valve 9 is closed after a predetermined hold time elapses while the opened state of the on-off valve 9 is maintained. Since the predetermined holding time is applied after the on-off valve 9 is opened by the holding timer 8b, a time interval when the on-off valve 9 is opened and the cleaning agent is supplied is determined, and accordingly, an appropriate amount of the cleaning agent for the turbocharger 2 is sprayed.

Next, the operation of the internal combustion engine 1, to which turbocharger 2 including the above-described turbocharger cleaning device is attached, will be described.

First, when the internal combustion engine 1 starts, the compressed air control valve 6 is opened by a command from the compressed air control part (not shown), the compressed air stored in the starting air tank 4 is introduced to a combustion chamber of the internal combustion engine 1 via the compressed air pipe 5. Accordingly, after the internal combustion engine 1 starts, the revolution speed of the internal combustion engine is increased to a normal operation. Fig. 2 shows a timing chart of the revolution speed of the turbocharger 2, and as shown in Fig. 2, the revolution speed is increased from the starting of the turbocharger 2, and the turbocharger 2 is operated at high rotational speed in the normal operation.

The air blow for discharging exhaust gas remaining in the combustion chamber is performed immediately after a predetermined operation ends and the internal combustion engine 1 stops. The compressed air control valve 6 is opened by the command from the compressed air control part (not shown), the compressed air stored in the starting air tank 4 is introduced to the combustion chamber of the internal combustion engine 1 via the compressed air pipe 5. The exhaust gas remaining the combustion chamber of the internal combustion engine 1 is discharged to the outside via the turbocharger 2 by the compressed air. At this time, the turbine of the turbocharger 2 is rotated at low rotational speed by the air blow. For example, the revolution speed at this time is 200 rpm (for example, the revolution speed at the normal operation is 13000 rpm). The air blow starting signal 7 is sent from the compressed air control valve 6 in conjunction with the air blow. The turbocharger cleaning device 11 is operated with the air blow starting signal 7 of the compressed air control valve 6 as a trigger.

Specifically, if the air blow starting signal 7 is sent to the controller 8, the opening and closing of the on-off valve 9 provided on the intermediate portion of the air supply pipe 12 are controlled by the offset timer 8a and the holding timer 8b. If the on-off valve 9 provided in the air supply pipe 12 is opened, transport air is introduced to the cleaning powder hopper 3.

Moreover, the cleaning powder (the powder of the magnesium hydroxide) in the cleaning powder hopper 3 is introduced to the turbocharger 2 via the cleaning agent supply pipe 10 along with the transport air by the transport air introduced to the cleaning powder hopper 3.

As shown in Fig. 2, after the normal operation, in which the turbocharger 2 is operated at high rotational speed, ends and the operation stops, the air blow starts during a predetermined time period. For example, the predetermined time period is from 2 minutes to 30 minutes. The offset is performed from timing when the air blow starting signal 7 is received to the controller 8 by the offset timer 8a provided in the controller 8 to timing when the revolution speed of the turbocharger 2 is decreased at the time when the air blow and the on-off valve 9 is opened. Specifically, when the air blow starts immediately after the internal combustion engine stops, and a predetermined time when the revolution speed of the turbocharger 2 is, for example, 200 rpm or less elapses thereafter, the cleaning agent is input. Since the offset time is different according to the size or the like of the turbocharger 2, the offset time can be adjusted in advance.

After the offset is performed, an opening degree of the on-off valve 9 is held for a predetermined time by the holding timer 8b provided in the controller 8. After the on-off valve is held for the predetermined time (1 second to 10 seconds), the on-off valve 9 is closed.

The turbine of the turbocharger 2 is rotated at low rotational speed at the time of the air blow. The cleaning powder introduced via the cleaning agent supply pipe 10 is supplied to the turbine which is rotated at low rotational speed in this way. Accordingly, it is possible to make the cleaning powder appropriately adhere on the turbine.

The following effects are exerted according to the above-described present embodiment.

The controller 8 is operated with the signal of the compressed air control valve 6, which is a device that performs in conjunction with the internal combustion engine 1, as the trigger, and thus, the timing of the air blow to the turbocharger 2 can be obtained. Moreover, the controller 8 is operated and the air blow starting signal 7 which opens and closes the on-off valve 9 provided in the air supply pipe 12 is sent. Accordingly, the transport air supplied to the cleaning agent storage part 3 is supplied only when the turbocharger 2 is operated at low rotational speed.

In addition, even when a tachometer is not provided in the turbocharger 2, the normal operation in which the turbocharger 2 is operated at high rotational speed can be avoided. Accordingly, since a revolution speed detection device or the like of the turbocharger 2 is not required, the structure of the turbocharger cleaning device 11 can be more simplified.

When the air blow of the internal combustion engine 1 is performed, the turbine of the turbocharger 2 is rotated at a low revolution speed. Since the cleaning agent is supplied at this timing, it is possible to make the cleaning agent appropriately adhere on the turbine of the turbocharger 2.

The turbine is rotated at low rotational speed, and accordingly, even when a cleaning agent having high hardness such as active carbon is used, there is no concern that the turbine is damaged. Accordingly, a kind of the cleaning agent can be widely selected.

The timing when the on-off valve 9 is opened by the controller 8 is offset from the applying timing of the air blow starting signal 7. The timing when the revolution speed of the turbocharger 2 is temporarily increased immediately after the air blow starts can be avoided. Moreover, the manual operation of the on-off valve 9 is not required, and the cleaning agent can be automatically sprayed in the state where the turbocharger 2 is rotated at low rotational speed. Accordingly, it is possible to make the cleaning agent securely adhere on the turbine of the turbocharger 2. In addition, since the length of the offset time is different according to the size of the turbocharger 2, the length of the offset time is set in advance, and thus, it is possible to automatically open the on-off valve 9 at the timing matching the revolution speed of the turbocharger 2. Moreover, a relationship between an actual revolution speed and time is observed at the time of land driving or at the time of a sea trial, and thus, the offset time is set to an optimal time. In addition, even when devices are added after the ship enters service, the added device can be performed by setting the relationship between the revolution speed and the time in manual.

Moreover, holding of the opening degree of the on-off valve 9 is performed by the controller 8. Accordingly, an appropriate amount of the cleaning agent can be supplied to the turbocharger 2. In addition, since the holding time is different according to the size of the turbocharger 2, the holding time becoming a base is set in advance, or preferably, the holding time is set to be minutely adjusted, and thus, the holding time optimal to the size of the turbocharger 2 can be automatically set. Moreover, the amount of the cleaning is increased as the size of the turbocharger 2 is increased, and thus, the holding time is lengthened. However, for example, when a basic holding time is set to 5 seconds and the turbocharger is initially operated, in a case where the tank is directly observed after the cleaning is performed and the corrosion remains, the holding time is adjusted to be lengthened, and thus, an optimal time is set. However, the time when the cleaning agent is supplied is incorporated to an upper limit of the holding time, for example, 10 seconds and a preset range in consideration of the maintenance of the turbocharger turbine.

In the cleaning agent supply pipe 10, since the general service air used in the ship is the transport air of the cleaning agent, a low pressure pipe is used. Accordingly, a complicated construction of a high pressure pipe is not required, and reconstruction work of the pipe can be easily performed.

Moreover, the on-off valve 9 may be provided in the cleaning agent supply pipe 10. Accordingly, the location at which the on-off valve 9 is installed can be selected from a wide range.

Moreover, as the device that performs in conjunction with the air blow of the internal combustion engine 1, instead of the compressed air control valve 6, the above-described priming pump or a starting air switch may be used.

### Reference Signs List

1: internal combustion engine
2: turbocharger
3: cleaning powder hopper (cleaning agent storage part)
4: starting air tank
5: compressed air pipe
6: compressed air control valve
7: air blow starting signal
8: controller
8a: offset timer
8b: holding timer
9: on-off valve
10: cleaning agent supply pipe
11: turbocharger cleaning device
12: air supply pipe

## Claims

1. A turbocharger cleaning device comprising:
a cleaning agent storage part (3) in which a cleaning agent is stored to clean a turbocharger (2) driven by exhaust gas introduced from an internal combustion engine;
an air supply pipe (12) which is configured to introduce transport air to the cleaning agent storage part;
an on-off valve (9) which is provided in the air supply pipe (12);
a cleaning agent supply pipe (10) which is configured to introduce the cleaning agent stored in the cleaning agent storage part (3) from the cleaning agent storage part (3) to the turbocharger (2) along with the transport air; and
a controller (8) which is configured to control an operation of the on-off valve (9),
**characterized in that** the controller (8) is configured to open the on-off valve (9) after the controller (8) receives an operation signal of a device in conjunction with air blow which discharges the remaining exhaust gas by compressed air introduced via a compressed air pipe (5) during a predetermined time after the internal combustion engine and the turbocharger (2) stop.

2. The turbocharger cleaning device according to claim 1,
wherein the controller (8) is configured to open the on-off valve (9) after the controller (8) receives the operation signal of the device and a predetermined offset time elapses.

3. The turbocharger cleaning device according to claim 1 or 2,
wherein the controller (8) is configured to close the on-off valve (9) after the on-off valve (9) is opened and a predetermined holding time elapses.

4. A turbocharger (2) which includes the turbocharger cleaning device according to any one of claims 1 to 3.

5. An internal combustion engine which includes the turbocharger (2) according to claim 4.

6. A turbocharger cleaning method using a turbocharger cleaning device, the turbocharger cleaning device comprising:
a cleaning agent storage part (3) in which a cleaning agent is stored to clean a turbocharger (2) driven by exhaust gas introduced from an internal combustion engine;
an air supply pipe (12) which introduces transport air to the cleaning agent storage part;
an on-off valve (9) which is provided in the air supply pipe (12);
a cleaning agent supply pipe (10) which introduces the cleaning agent stored in the cleaning agent storage part (3) from the cleaning agent storage part (3) to the turbocharger (2) along with the transport air; and
a controller (8) which controls an operation of the on-off valve (9),
the method comprising a step
wherein the controller (8) opens the on-off valve (9) after the controller (8) receives an operation signal of a device in conjunction with air blow which discharges the remaining exhaust gas by compressed air introduced via a compressed air pipe (5) during a predetermined time after the internal combustion engine and the turbocharger (2) stop.

7. A turbocharger cleaning method according to claim 6, further comprising:
a step of performing air blow to discharge exhaust gas remaining in an internal combustion engine;
a step of supplying a cleaning agent from a turbocharger cleaning device to a turbocharger (2) after the step of performing the air blow;
a step of being in conjunction with the air blow and sending the operation signal to the turbocharger cleaning device.

8. A method according to claim 6 or 7, wherein the controller (8) opens the on-off valve (9) after the controller (8) receives the operation signal of the air blow control device and a predetermined offset time elapses.

9. A method according to any of the claims 6-8, wherein the controller (8) closes the on-off valve (9) after the on-off valve (9) is opened and a predetermined holding time elapses.

## Patentansprüche

1. Turboladerreinigungsvorrichtung, umfassend:
einen Reinigungsmittelaufbewahrungsteil (3), in dem ein Reinigungsmittel zum Reinigen eines Turboladers (2) aufbewahrt wird, der durch Abgas angetrieben wird, das aus einem Verbrennungsmotor eingebracht wird;
ein Luftzufuhrrohr (12), das konfiguriert ist, Beförderungsluft in den Reinigungsmittelaufbewahrungsteil einzubringen;
ein Ein-Aus-Ventil (9), das in dem Luftzufuhrrohr (12) vorgesehen ist;
ein Reinigungsmittelzufuhrrohr (10), das konfiguriert ist, das in dem Reinigungsmittelaufbewahrungsteil (3) aufbewahrte Reinigungsmittel zusammen mit der Beförderungsluft aus dem Reinigungsmittelaufbewahrungsteil (3) in den Turbolader (2) einzubringen; und
eine Steuerung (8), die konfiguriert ist, einen Betrieb des Ein-Aus-Ventils (9) zu steuern,
**dadurch gekennzeichnet, dass** die Steuerung (8) konfiguriert ist, das Ein-Aus-Ventil (9) zu öffnen, nachdem die Steuerung (8) ein Betriebssignal einer Vorrichtung in Verbindung mit Luftgebläse empfangen hat, wodurch das verbleibende Abgas durch Druckluft, die über eine Druckluftpumpe (5) eingebracht wird, während einer vorbestimmten Zeit entladen wird, nachdem der Verbrennungsmotor und der Turbolader (2) angehalten haben.

2. Turboladerreinigungsvorrichtung nach Anspruch 1,
wobei die Steuerung (8) konfiguriert ist, das Ein-Aus-Ventil (9) zu öffnen, nachdem die Steuerung (8) das Betriebssignal der Vorrichtung empfangen hat und eine vorbestimmte Versatzzeit vergangen ist.

3. Turboladerreinigungsvorrichtung nach Anspruch 1 oder 2,
wobei die Steuerung (8) konfiguriert ist, das Ein-Aus-Ventil (9) zu schließen, nachdem das Ein-Aus-Ventil (9) geöffnet wurde und eine vorbestimmte Haltezeit vergangen ist.

4. Turbolader (2), der die Turboladerreinigungsvorrichtung nach einem der Ansprüche 1 bis 3 aufweist.

5. Verbrennungsmotor, der den Turbolader (2) nach Anspruch 4 aufweist.

6. Turboladerreinigungsverfahren unter Verwendung einer Turboladerreinigungsvorrichtung, wobei die Turboladerreinigungsvorrichtung umfasst:
einen Reinigungsmittelaufbewahrungsteil (3), in dem ein Reinigungsmittel zum Reinigen eines Turboladers (2) aufbewahrt wird, der durch Abgas angetrieben wird, das aus einem Verbrennungsmotor eingebracht wird;
ein Luftzufuhrrohr (12), das Beförderungsluft in den Reinigungsmittelaufbewahrungsteil einbringt;
ein Ein-Aus-Ventil (9), das in dem Luftzufuhrrohr (12) vorgesehen ist;
ein Reinigungsmittelzufuhrrohr (10), das das in dem Reinigungsmittelaufbewahrungsteil (3) aufbewahrte Reinigungsmittel zusammen mit der Beförderungsluft aus dem Reinigungsmittelaufbewahrungsteil (3) in den Turbolader (2) einbringt; und
eine Steuerung (8), die einen Betrieb des Ein-Aus-Ventils (9) steuert,
wobei das Verfahren einen Schritt umfasst,
bei dem die Steuerung (8) das Ein-Aus-Ventil (9) öffnet, nachdem die Steuerung (8) ein Betriebssignal einer Vorrichtung in Verbindung mit Luftgebläse empfangen hat, wodurch das verbleibende Abgas durch Druckluft, die über eine Druckluftpumpe (5) eingebracht wird, während einer vorbestimmten Zeit entladen wird, nachdem der Verbrennungsmotor und der Turbolader (2) angehalten haben.

7. Turboladerreinigungsverfahren nach Anspruch 6, weiter umfassend:
einen Schritt des Durchführens von Luftgebläse, um in einem Verbrennungsmotor verbleibendes Abgas zu entladen;
einen Schritt des Zuführens eines Reinigungsmittels aus einer Turboladerreinigungsvorrichtung an einen Turbolader (2) nach dem Schritt des Durchführens des Luftgebläses;
einen Schritt des In-Verbindung-Seins mit dem Luftgebläse und Sendens des Betriebssignals an die Turboladerreinigungsvorrichtung.

8. Verfahren nach Anspruch 6 oder 7, wobei die Steuerung (8) das Ein-Aus-Ventil (9) öffnet, nachdem die Steuerung (8) das Betriebssignal der Luftgebläsesteuerungsvorrichtung empfangen hat und eine vorbestimmte Versatzzeit vergangen ist.

9. Verfahren nach einem der Ansprüche 6 bis 8, wobei die Steuerung (8) das Ein-Aus-Ventil (9) schließt, nachdem das Ein-Aus-Ventil (9) geöffnet wurde und eine vorbestimmte Haltezeit vergangen ist.

## Revendications

1. Dispositif de nettoyage de turbocompresseur, comprenant :
une partie de stockage d'agent de nettoyage (3) dans laquelle est stocké un agent de nettoyage pour nettoyer un turbocompresseur (2) entraîné par du gaz d'échappement introduit à partir d'un moteur à combustion interne ;
un tuyau d'alimentation en air (12) qui est configuré pour introduire de l'air de transport vers la partie de stockage d'agent de nettoyage ;
un clapet d'ouverture/fermeture (9) qui est disposé dans le tuyau d'alimentation en air (12) ;
un tuyau d'alimentation en agent de nettoyage (10) qui est configuré pour introduire l'agent de nettoyage stocké dans la partie de stockage d'agent de nettoyage (3) à partir de la partie de stockage d'agent de nettoyage (3) vers le turbocompresseur (2) avec l'air de transport ; et
un dispositif de commande (8) qui est configuré pour commander un actionnement du clapet d'ouverture/fermeture (9),
**caractérisé en ce que** le dispositif de commande (8) est configuré pour ouvrir le clapet d'ouverture/fermeture (9) après que le dispositif de commande (8) a reçu un signal d'actionnement d'un dispositif conjointement avec un jet d'air qui décharge le gaz d'échappement restant par de l'air comprimé introduit par l'intermédiaire d'un tuyau d'air comprimé (5) pendant un temps prédéterminé après l'arrêt du moteur à combustion interne et du turbocompresseur (2).

2. Dispositif de nettoyage de turbocompresseur selon la revendication 1,
dans lequel le dispositif de commande (8) est configuré pour ouvrir le clapet d'ouverture/fermeture (9) après que le dispositif de commande (8) a reçu le signal d'actionnement du dispositif et qu'un temps de décalage prédéterminé s'est écoulé.

3. Dispositif de nettoyage de turbocompresseur selon la revendication 1 ou 2,
dans lequel le dispositif de commande (8) est configuré pour fermer le clapet d'ouverture/fermeture (9) après que le clapet d'ouverture/fermeture (9) a été ouvert et qu'un temps de maintien prédéterminé s'est écoulé.

4. Turbocompresseur (2) qui comprend le dispositif de nettoyage de turbocompresseur selon l'une quelconque des revendications 1 à 3.

5. Moteur à combustion interne qui comprend le turbocompresseur (2) selon la revendication 4.

6. Procédé de nettoyage de turbocompresseur utilisant un dispositif de nettoyage de turbocompresseur, le dispositif de nettoyage de turbocompresseur comprenant :
une partie de stockage d'agent de nettoyage (3) dans laquelle est stocké un agent de nettoyage pour nettoyer un turbocompresseur (2) entraîné par du gaz d'échappement introduit à partir d'un moteur à combustion interne ;
un tuyau d'alimentation en air (12) qui introduit de l'air de transport vers la partie de stockage d'agent de nettoyage ;
un clapet d'ouverture/fermeture (9) qui est disposé dans le tuyau d'alimentation en air (12) ;
un tuyau d'alimentation en agent de nettoyage (10) qui introduit l'agent de nettoyage stocké dans la partie de stockage d'agent de nettoyage (3) à partir de la partie de stockage d'agent de nettoyage (3) vers le turbocompresseur (2) avec l'air de transport ; et
un dispositif de commande (8) qui commande un actionnement du clapet d'ouverture/fermeture (9),
le procédé comprenant une étape
dans laquelle le dispositif de commande (8) ouvre le clapet d'ouverture/fermeture (9) après que le dispositif de commande (8) a reçu un signal d'actionnement d'un dispositif conjointement avec un jet d'air qui décharge le gaz d'échappement restant par de l'air comprimé introduit par l'intermédiaire d'un tuyau d'air comprimé (5) pendant un temps prédéterminé après l'arrêt du moteur à combustion interne et du turbocompresseur (2).

7. Procédé de nettoyage de turbocompresseur selon la revendication 6, comprenant en outre :
une étape de mise en oeuvre d'un jet d'air pour décharger un gaz d'échappement restant dans un moteur à combustion interne ;
une étape de fourniture d'un agent de nettoyage à partir d'un dispositif de nettoyage de turbocompresseur vers un turbocompresseur (2) après l'étape de mise en oeuvre du jet d'air ;
une étape se déroulant conjointement avec le jet d'air et de transmission du signal d'actionnement au dispositif de nettoyage de turbocompresseur.

8. Procédé selon la revendication 6 ou 7, dans lequel le dispositif de commande (8) ouvre le clapet d'ouverture/fermeture (9) après que le dispositif de commande (8) a reçu le signal d'actionnement du dispositif de commande de jet d'air et qu'un temps de décalage prédéterminé s'est écoulé.

9. Procédé selon l'une quelconque des revendications 6 à 8, dans lequel le dispositif de commande (8) ferme le clapet d'ouverture/fermeture (9) après que le clapet d'ouverture/fermeture (9) a été ouvert et qu'un temps de maintien prédéterminé s'est écoulé.
